# EUROPÄISCHE PATENTSCHRIFT

(11) **EP 4 053 066 B1**
(45) Veröffentlichungstag und Bekanntmachung des Hinweises auf die Patenterteilung: **11.12.2024**
(21) Anmeldenummer: 22155307.6
(22) Anmeldetag: 07.02.2022
(51) Int. Cl.: B66C 23/36, B66C 23/62

(54) **VORRICHTUNG UND VERFAHREN ZUR MONTAGE / DEMONTAGE EINES MOBILKRANAUSLEGERS**
DEVICE AND METHOD FOR FITTING / REMOVING A MOBILE CRANE BOOM
DISPOSITIF ET PROCÉDÉ DE MONTAGE / DÉMONTAGE D'UNE FLÈCHE DE GRUE MOBILE

(30) Priorität: 09.02.2021 DE 102021102919
(43) Veröffentlichungstag der Anmeldung: 07.09.2022
(73) Patentinhaber: Liebherr-Werk Ehingen GmbH, 89584 Ehingen/Donau (DE)
(72) Erfinder: Boos, Bernd, 72537 Mehrstetten (DE)
(74) Vertreter: Laufhütte, Dieter

(56) Entgegenhaltungen:
- DE-T5- 112016 001 320
- JP-A- 2014 031 231
- JP-A- 2016 199 345

## Beschreibung

Die vorliegende Erfindung betrifft eine Vorrichtung zur Montage und Demontage eines Auslegers eines Mobilkrans, insbesondere eines Teleskopauslegers, sowie einen Mobilkran mit einer erfindungsgemäßen Vorrichtung und ein Verfahren zur Montage eines Mobilkranauslegers unter Verwendung der erfindungsgemäßen Vorrichtung.

Große Mobilkrane sind häufig zu schwer, um betriebsbereit, d.h. vollständig gerüstet, im öffentlichen Straßenverkehr verfahren zu werden. Somit sind Bauteile vom Mobilkran für die Straßenfahrt zu demontieren und separat zu transportieren. Eine für die Demontage in Frage kommende Komponente mit hohem Gewicht ist der Ausleger. Dies betrifft insbesondere Mobilkrane mit einem Teleskopausleger, welcher mehrere verschiebbar ineinander gelagerte und über einen oder mehrere Teleskopierzylinder ein- und ausfahrbare Teleskopschüsse umfasst und daher ein hohes Eigengewicht aufweist (z.B. in der Größenordnung von 40t).

Die Montage und Demontage des Teleskopauslegers ist aufwändig und zeitintensiv. Aus dem Stand der Technik sind dabei Lösungen bekannt, bei denen der (oder die) Teleskopierzylinder des Teleskopauslegers dazu verwendet wird, den Ausleger vom Mobilkran auf ein Transportfahrzeug wie z.B. eine Zugmaschine mit Sattelauflieger zu schieben (und umgekehrt). Nachteilhaft ist hierbei, dass der Teleskopierzylinder für den Kranbetrieb notwendigerweise sehr groß dimensioniert ist, d.h. er weist einen großen Durchmesser auf und benötigt sehr viel Hydrauliköl für seine Bewegung. Folglich sind die hydraulischen Verbindungsschläuche ebenfalls mit einem großen Querschnitt auszuführen, welcher aber für das bloße Verschieben des Auslegers beim Montage- bzw. Demontagevorgang gar nicht benötigt wird. Auch sind die Hydraulikschläuche relativ lange auszuführen, da sie die gesamte Strecke zwischen dem Anschluss der Hilfshydraulik des Mobilkrans und dem Hydraulikanschluss am Teleskopausleger im Transportzustand auf dem Sattelauflieger überbrücken müssen. Eine weitere bekannte Möglichkeit besteht darin, ein speziell für die Montage- bzw. Demontage des Auslegers ausgerüstetes Spezialfahrzeug zu verwenden, welches einen integrierten Mechanismus zur Bewegung des Auslegers zum oder vom Mobilkran aufweist. Bekannt ist beispielsweise eine Lösung, bei der ein an der Ladefläche des Transportfahrzeugs befestigter Hydraulikzylinder zur horizontalen Verschiebung des Auslegers verwendet wird, wobei der Hydraulikzylinder entsprechend lang ausgeführt ist, um die Strecke zum Mobilkran zu überbrücken. Nachteilhaft hieran ist, dass derartige Spezialfahrzeuge teuer in der Herstellung sind und nur für diesen einen Zweck verwendet werden können.

Das Dokument DE 11 2016 001 320 T5 offenbart den Oberbegriff des Anspruchs 1.

Die Aufgabe der vorliegenden Erfindung ist es daher, den Montage und Demontageprozess des Auslegers bei Mobilkranen zu vereinfachen und kürzer zu gestalten. Darüber hinaus sollen die benötigten Arbeitsmittel kostengünstiger ausgestaltet sein und die teuren Arbeitsmittel wie z.B. das den Ausleger transportierende Transportfahrzeug nicht ausschließlich für einen einzigen Einsatzzweck bevorratet, sondern vielfältig einsetzbar sein.

Erfindungsgemäß wird diese Aufgabe durch eine Vorrichtung mit den Merkmalen des Anspruchs 1 gelöst. Vorteilhafte Ausführungsformen der Erfindung ergeben sich aus den Unteransprüchen und der nachfolgenden Beschreibung.

Demnach wird eine Vorrichtung zur Montage und Demontage eines Mobilkranauslegers vorgeschlagen, welche folgendes umfasst:
- eine am Mobilkran und/oder einem Transportfahrzeug angebrachte oder anbringbare Stützvorrichtung, auf welcher der Ausleger ablegbar und fixierbar bzw. verriegelbar ist,
- einen Rollenwagen, auf welchem der Ausleger ablegbar ist und welcher, insbesondere auf der dem Mobilkran abgewandten Seite der Stützvorrichtung, beweglich auf dem Transportfahrzeug gelagert oder lagerbar ist, und
- einen am Transportfahrzeug angebrachten oder anbringbaren Führungsmechanismus, mittels welchem der Rollenwagen - und somit der darauf abgelegte Ausleger - parallel zur Längsachse des Auslegers aktiv bewegbar ist, und
- der Ausleger verschiebbar ist, wobei der Führungsmechanismus eine Antriebseinheit umfasst, welche entlang einer Führungsvorrichtung bewegbar und am Rollenwagen angeordnet ist.

Die Stützvorrichtung kann mehrere Bestandteile umfassen, welche teilweise am Mobilkran und teilweise am Transportfahrzeug angeordnet bzw. anordenbar sind.

Die Bewegung des Auslegers vom Transportfahrzeug zum Mobilkran oder umgekehrt mittels des insbesondere hydraulisch antreibbaren Rollenwagens erfolgt im Wesentlichen horizontal und erfordert ein wesentlich geringeres Hydraulikölvolumen als die im Falle eines Teleskopauslegers verbauten Teleskopierzylinder. Dadurch ergibt sich eine einfache Handhabung der erfindungsgemäßen Vorrichtung, da keine überdimensionierten Hydraulikleitungen verlegt werden müssen. Alternativ kann der Rollenwagen bzw. der Führungsmechanismus auch elektrisch antreibbar sein, sodass hier gar kein Hydraulikanschluss benötigt wird.

Die dem Transportfahrzeug zugeordneten Komponenten der erfindungsgemäßen Vorrichtung müssen ferner nicht zwingend fest an diesem verbaut sein. Es ist sogar vorteilhaft, wenn diese Komponenten lösbar am Transportfahrzeug angebracht, d.h. von diesem nach dem Einsatz wieder abbaubar sind. Dadurch kann das Transportfahrzeug, bei welchem es sich um eine Zugmaschine mit Sattelauflieger handeln kann, nach der Montage des Auslegers am Mobilkran und der Demontage der Komponenten der erfindungsgemäßen Vorrichtung für andere Zwecke bzw. Transportzwecke, eingesetzt werden. Dies erhöht die Flexibilität der Arbeitsmittel und senkt die Kosten.

Die vom Transportfahrzeug abgebauten Komponenten sind vorzugsweise dem Mobilkran zugeordnet und in speziellen Halte- bzw. Lagermitteln (z.B. Aufbewahrungskisten und/oder Halterungen) verstaubar. Alternativ können die entsprechenden Halte- bzw. Lagermittel auch am Transportfahrzeug vorgesehen sein, ohne dessen Mehrzwecktauglichkeit zu beeinträchtigen.

In einer möglichen Ausführungsform ist vorgesehen, dass die Stützvorrichtung einen am Mobilkran oder Transportfahrzeug angebrachten oder anbringbaren Rollenbock mit einer Rollenlagerung zur Aufnahme und Führung des Auslegers umfasst. Der Ausleger wird auf der Rollenlagerung abgelegt, welche vorzugsweise mindestens zwei, idealerweise aber mindestens vier Rollen umfasst, sodass beim Verschieben des Auslegers relativ zum Rollenbock der Ausleger rollengelagert ist. Dadurch verringern sich die zum horizontalen Verschieben des Auslegers nötigen Antriebskräfte.

Der Rollenbock ist vorzugsweise am Mobilkran angeordnet (bzw. anordenbar), beispielsweise am Heck eines Unterwagens des Mobilkrans. Alternativ kann der Rollenbock auch am Transportfahrzeug angeordnet (bzw. anordenbar) sein, insbesondere am Heck, welches bei der Montage / Demontage dem Mobilkran zugewandt ist. Im zuletzt genannten Fall kann der Ausleger bei einer beliebigen Stellung des Oberwagens relativ zum Unterwagen am Mobilkran montiert bzw. von diesem demontiert werden.

Vorzugsweise ist der Rollenbock in vertikaler Richtung höhenverstellbar, beispielsweise mittels eines oder mehrerer Hydraulikzylinder, welche die Rollenlagerung relativ zur Befestigung des Rollenbocks am Mobilkran in vertikaler Richtung verstellen. Die Bezeichnung "vertikale Richtung" bezieht sich dabei auf den Fall, dass der Mobilkran auf einer horizontalen Ebene steht.

Durch die Höhenverstellbarkeit ist es möglich, den auf der Stützvorrichtung gelagerten Ausleger anzuheben und so z. B. von einer weiteren Stütze abzuheben, sodass der Ausleger vollständig rollengelagert und einfach verschiebbar ist. Ferner bietet sich dadurch die Möglichkeit, den Ausleger bei der Montage relativ zum Mobilkran präzise zu positionieren, sodass die Verbindungselemente bzw. Bolzen bequem gesetzt werden können. Bei der Demontage lässt sich durch ein Anheben des auf der Stützvorrichtung abgelegten Auslegers die Bolzenverbindung zwischen dem Anlenkstück und dem Wippzylinder entlasten, damit sie bequem gelöst werden kann.

In einer weiteren möglichen Ausführungsform ist vorgesehen, dass die Stützvorrichtung einen am Transportfahrzeug angebrachten oder anbringbaren Stützbock umfasst, welcher vorzugsweise von einer Fixierungsposition, in welcher der Ausleger auf dem Stützbock ablegbar und/oder fixierbar ist, in eine Freigabeposition, in welcher der Stützbock eine horizontale Bewegung des Auslegers nicht blockiert, verbringbar ist und umgekehrt. Die Fixierungsposition muss dabei nicht zwingend selbst eine Fixierung des Auslegers bewirken. Diese kann beispielsweise über spezielle Fixierungselemente herstellbar sein, wenn sich der Stützbock in der Fixierungsposition befindet. Der Stützbock befindet sich vorzugsweise zwischen Rollenbock und Rollenwagen in einem hinteren Bereich des Transportfahrzeugs.

Die Bewegung zwischen Freigabe- und Fixierungsposition könnte beispielsweise durch vertikale Verstellung einer Lagerung des Stützbocks oder durch Verfahren und/oder Verschwenken von Klammerelementen bzw. Blöcken, welche in der Fixierungsposition den Ausleger greifen bzw. klammern oder lediglich kontaktieren (und beispielsweise eine Auflagefläche bilden), erfolgen. Alternativ wäre es denkbar, dass der Stützbock unbeweglich ist und eine Trennung bzw. Freigabe des Auslegers nur durch ein Anheben mittels des höhenverstellbaren Rollenbocks erfolgt.

Erfindungsgemäß ist vorgesehen, dass der Führungsmechanismus eine Antriebseinheit umfasst, welche entlang einer Führungsvorrichtung bewegbar ist, wobei die Antriebseinheit am Rollenwagen angeordnet bzw. vorgesehen ist. Die Führungsvorrichtung verläuft vorzugsweise horizontal entlang der Längsachse des Auslegers bzw. des Transportfahrzeugs und kann an einer Ladefläche befestigt oder befestigbar sein, z.B. an einem Sattelauflieger. Die Führungsvorrichtung kann Schienen umfassen, in denen der Rollenwagen geführt ist.

Die Antriebseinheit ist vorzugsweise hydraulisch antreibbar, kann aber auch elektrisch angetrieben sein. Durch Antreiben der Antriebseinheit wird der Rollenwagen und damit auch der darauf gelagerte Ausleger relativ zum Transportfahrzeug und damit auch zum Mobilkran verfahren.

In einer weiteren möglichen Ausführungsform ist vorgesehen, dass die Führungsvorrichtung ein entlang einer Ladefläche des Transportfahrzeugs angebrachtes oder anbringbares Zugmittel umfasst, welches über eine oder mehrere Rollen der Antriebseinheit geführt ist, wobei mindestens eine der Rollen aktiv antreibbar ist. Ein derartiger Antriebsmechanismus ist einfach zu realisieren und vor allem schnell und einfach an- und wieder abzubauen. Das Zugmittel muss lediglich an entsprechenden und ggf. sowieso bereits vorhandenen Befestigungspunkten des Transportfahrzeugs (mindestens zwei, nämlich vorne und hinten am Transportfahrzeug) befestigt werden. Bei dem Zugmittel kann es sich z.B. um ein Seil, ein Band oder eine Kette handeln, wobei auch Kombinationen davon denkbar sind.

Das Zugmittel überträgt im Gegensatz zu bekannten Lösungen mit hydraulischen Zylindern lediglich Zugkräfte. Der Zylinder überträgt hingegen sowohl Zug- als auch Druckkräfte. Bei der Belastung auf Druck, sind dabei die Knicklasten mit zu betrachten. Aus diesem Grund ist der lange Zylinder bei derartigen Lösungen schwerer als eigentlich notwendig auszuführen und ggf. sind sogar weitere Verbindungsstellen zur Lager- bzw. Aufliegerfläche notwendig, um den Zylinder zu führen und vor der Knickung zu schützen. Das Zugmittel kann hingegen vergleichsweise leicht ausgeführt sein, ebenso wie die Antriebseinheit.

In einer weiteren möglichen Ausführungsform ist vorgesehen, dass das Zugmittel lösbar auf der Ladefläche des Transportfahrzeugs montierbar ist, vorzugsweise über Befestigungsmittel, welche an einem vorderen und einem hinteren Ende der Ladefläche angeordnet sind. Es können zwei Befestigungspunkte bzw. -mittel vorgesehen sein, zwischen denen das Zugmittel gespannt bzw. spannbar ist. Allerdings können auch mehrere Befestigungspunkte, z.B. seitlich vorne und hinten, vorgesehen sein, wobei sich das Zugmittel, welches mittig entlang der Ladefläche verlaufen kann, vorzugsweise an den Enden zu den jeweiligen Befestigungspunkten verzweigt (z.B. als Y-Verzweigung). Bei den Befestigungsmitteln kann es sich um Ladungssicherungsösen handeln.

In einer weiteren möglichen Ausführungsform ist vorgesehen, dass das Zugmittel eine Kette, insbesondere Hebezeugkette, ist oder umfasst, welche über ein oder mehrere Kettenräder der Antriebseinheit geführt ist, wobei die Kette vorzugsweise ein Spannmittel umfasst, mittels welchem die Kette spannbar ist. Dadurch lässt sich der Totweg zu Beginn der Auslegerbewegung minimieren.

Als Verbindungselemente der Hebezeugkette mit den Befestigungsmitteln könnten Kettengehänge zum Einsatz kommen, wie sie in der DE 20 2018 107 005 U1, auf welche hiermit explizit Bezug genommen wird, offenbart sind. Diese Verbindungselemente können somit jeweils zwei oder drei Kettenstränge mit Ausgleichswippen aufweisen. Ferner lässt sich gemäß einer besonderen Lösung mittels hakenförmigen Verkürzungselementen (zur flexiblen Verkürzung der Kettenstränge durch Einhängen der Kettenglieder in die Haken) ein einfacher Wechsel zwischen verschiedenen Transportfahrzeugen ermöglichen. Die Enden der ggf. verkürzbaren Kettenstränge können an den Befestigungsmitteln bzw. Ladungssicherungsösen angebracht und beispielsweise über einen Ring miteinander und mit der zentral entlang der Ladefläche des Transportfahrzeugs verlaufenden Hebezeugkette verbunden sein.

In einer weiteren möglichen Ausführungsform ist vorgesehen, dass die Antriebseinheit hydraulisch antreibbar ist, wobei eine Hydraulikleitung vorgesehen ist, welche von der Antriebseinheit zu einem Hydraulikanschluss des Mobilkrans verlegbar ist. Vorzugsweise ist oder umfasst die Hydraulikleitung einen flexiblen Hydraulikschlauch. Dieser kann auf einer Schlauchtrommel auf- und abwickelbar gelagert sein. Über die Schlauchtrommel wird die Antriebseinheit mit Öl versorgt, während die Schlauchtrommel selbst mit der Hydraulik des Mobilkrans verbunden ist.

Da die Lagerung des Auslegers während der Bewegung durch die Antriebseinheit bevorzugt vollständig rollengelagert ist, sind die benötigten Antriebskräfte sehr klein und als Antrieb dient ausschließlich eine für diesen speziellen Zweck vorgesehene bzw. ausgelegte Antriebseinheit. Aufgrund des kleinen benötigten Volumenstroms an Hydrauliköl sind die Querschnitte aller Hydraulikanschlüsse und der Hydraulikleitung(en) klein und somit die Bauteile relativ einfach zu handhaben.

In einer weiteren möglichen Ausführungsform ist vorgesehen, dass der Führungsmechanismus bzw. die Antriebseinheit über ein Hydrauliksystem des Mobilkrans antreibbar ist. Der Mobilkran dient also als einziger Antrieb für die erfindungsgemäße Vorrichtung. Somit wird für den Antrieb ausschließlich das Hydrauliköl des Mobilkrans verwendet. Nach erfolgreicher Montage / Demontage wird die Montagevorrichtung vom Mobilkran getrennt. Die Trennung erfolgt insbesondere stets in einem Zustand, in dem die Hydraulikleitungen noch mit Öl gefüllt sind (die Kupplungsstellen schließen das jeweilige Ölvolumen auslaufsicher ein).

Wird die die Vorrichtung später wieder an den Mobilkran montiert, beispielsweise zur Demontage des Auslegers, treibt dieser wieder mit seinem Hydrauliköl die erfindungsgemäße Vorrichtung an und sein Öl, das noch in der Vorrichtung enthalten ist, fließt wieder zum Mobilkran zurück. Es erfolgt also keine Vermischung mit älterem oder weniger hochwertigem Hydrauliköl eines anderen Systems. Bei der großen Menge an Öl, das bei derartigen Mobilkranen im Umlauf ist, ist dies ein wesentlicher Kostenfaktor, wenn ein Ölwechsel notwendig wird.

Die vorliegende Erfindung betrifft ferner einen Mobilkran mit einer erfindungsgemäßen Vorrichtung. Dabei ergeben sich offensichtlich dieselben Vorteile und Eigenschaften wie für die erfindungsgemäße Vorrichtung, weshalb an dieser Stelle auf eine wiederholende Beschreibung verzichtet wird. Der Mobilkran weist vorzugsweise einen Teleskopausleger auf, wobei auch andere Ausführungen, z.B. Gittermastausleger, denkbar und mittels der erfindungsgemäßen Vorrichtung montierbar bzw. demontierbar sind. Der Mobilkran kann einen Unterwagen mit Raupen- oder Radfahrwerk aufweisen sowie einen drehbar darauf gelagerten Oberwagen, an welchen der Ausleger montierbar ist.

Durch die feste Zuordnung der erfindungsgemäßen Vorrichtung zu dem jeweiligen Mobilkran ergibt sich unter anderem der oben beschriebene Vorteil, dass zum Antrieb der Antriebseinheit nur das Hydrauliköl des Mobilkrans verwendet wird und keine Vermischung mit Öl eines anderen Systems erfolgt.

Weiterhin betrifft die vorliegende Erfindung ein Verfahren zur Montage eines auf einem Transportfahrzeug gelagerten Auslegers, insbesondere Teleskopauslegers, an einem Mobilkran unter Verwendung der erfindungsgemäßen Vorrichtung. Das Verfahren umfasst die folgenden Schritte:
- Positionieren des Transportfahrzeugs relativ zum Mobilkran, insbesondere durch Heranfahren des Transportfahrzeugs an den Mobilkran oder umgekehrt oder beides,
- Lösen der Fixierung des Auslegers am Transportfahrzeug, insbesondere an der Stützvorrichtung,
- Verschieben des Auslegers entlang von dessen Längsachse in Richtung Mobilkran durch aktives Bewegen des Rollenwagens, wobei der Ausleger auf der Stützvorrichtung und dem Rollenwagen rollend gelagert ist,
- Verbinden des Auslegers mit dem Mobilkran, insbesondere durch Setzen der entsprechenden Bolzen, und
- Aufwippen des Auslegers, sodass er von der Stützvorrichtung und dem Rollenwagen abhebt.

Dabei ergeben sich offensichtlich dieselben Vorteile und Eigenschaften wie für die erfindungsgemäße Vorrichtung, weshalb an dieser Stelle auf eine wiederholende Beschreibung verzichtet wird.

Die Demontage des Auslegers vom Mobilkran erfolgt im Wesentlich durch Ausführung dieser Schritte in umgekehrter Reihenfolge.

In einer möglichen Ausführungsform des Verfahrens ist vorgesehen, dass die Stützvorrichtung einen am Transportfahrzeug angebrachten Stützbock umfasst, wobei vor dem Verschieben des Auslegers der Stützbock von einer Fixierungsposition in eine Freigabeposition bewegt wird, in welcher der Stützbock eine Verschiebung des Auslegers nicht blockiert. Ab diesem Zeitpunkt ist der Ausleger vorzugsweise vollständig rollengelagert.

In einer weiteren möglichen Ausführungsform ist vorgesehen, dass die Stützvorrichtung einen am Mobilkran angebrachten, höhenverstellbaren Rollenbock mit einer Rollanlagerung zur Aufnahme und Führung des Auslegers umfasst, wobei der Ausleger mit dem Rollenbock so angehoben wird, dass er sich demontieren lässt. Danach liegt der Ausleger erst alleinig auf dem Rollenbock auf. Des Weiteren kann nach einem horizontalen Verschieben der Ausleger am Mobilkran durch Verstellung des Rollenbocks in eine Montageposition verbringbar sein, in welcher eine Verbindung zwischen Ausleger und Mobilkran herstellbar ist. Der Rollenbock erfüllt somit eine Doppelfunktion.

In einer weiteren möglichen Ausführungsform ist vorgesehen, dass der Führungsmechanismus eine am Rollenwagen angeordnete bzw. in diesen integrierte Antriebseinheit umfasst, welche mit einem entlang einer Ladefläche des Transportfahrzeugs angebrachten Zugmittel, insbesondere einer Kette bzw. Hebezeugkette, in Verbindung steht, wobei durch Antreiben der Antriebseinheit der Rollenwagen samt Ausleger in Richtung Mobilkran bewegt wird.

In einer weiteren möglichen Ausführungsform ist vorgesehen, dass die Antriebseinheit hydraulisch durch ein Hydrauliksystem des Mobilkrans angetrieben wird, wobei nach dem Positionieren des Transportfahrzeugs relativ zum Mobilkran eine hydraulische Verbindung zwischen der Antriebseinheit und dem Hydrauliksystem des Mobilkrans hergestellt wird, vorzugsweise über einen auf einer Schlauchtrommel auf- und abwickelbar gelagerten Hydraulikschlauch.

Weitere Merkmale, Einzelheiten und Vorteile der Erfindung ergeben sich aus den nachfolgend anhand der Figuren erläuterten Ausführungsbeispielen. Es zeigen:
- Figur 1:: eine Seitenansicht eines Mobilkrans und eines Transportfahrzeugs mit darauf gelagertem Teleskopausleger gemäß einem Ausführungsbeispiel der Erfindung;
- Figur 2:: den Mobilkran und das Transportfahrzeug gemäß Figur 1 in einer perspektivischen Ansicht, wobei der Ausleger am Mobilkran montiert ist, mit einer vergrößerten Darstellung des Stützbocks;
- Figur 3:: eine vergrößerte Ansicht des Rollenbocks in einer perspektivischen Ansicht;
- Figur 4:: eine schematische Ansicht des Transportfahrzeugs, an dessen Ladefläche ein Zugmittel angebracht ist, gemäß einem ersten Ausführungsbeispiel;
- Figur 5:: die Ansicht gemäß Figur 4 gemäß einem zweiten Ausführungsbeispiel;
- Figur 6:: eine Seitenansicht des Transportfahrzeugs mit darauf gelagertem Teleskopausleger gemäß einem Ausführungsbeispiel, wobei der Rollenwagen und die Schlauchtrommel eingezeichnet sind;
- Figur 7:: ein erstes Ausführungsbeispiel des Rollenwagens in einer schematischen Seitenansicht; und

- Figur 8:: ein zweites Ausführungsbeispiel des Rollenwagens in einer schematischen Draufsicht.

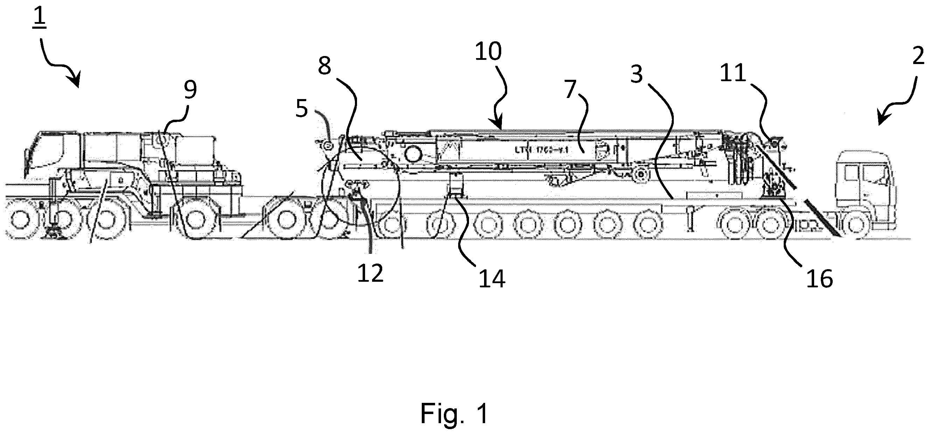

Die Figur 1 zeigt in einer seitlichen Ansicht den Heckbereich eines Mobilkrans 1, dessen Teleskopausleger 10 demontiert und auf einem Transportfahrzeug 2 gelagert ist, gemäß einem Ausführungsbeispiel der Erfindung. Bei dem Transportfahrzeug 2 handelt es sich vorliegend um eine Zugmaschine mit Sattelauflieger 2, welcher für die Montage / Demontage des Auslegers 10 mit dessen Heckbereich an das Heck des Mobilkrans 1 herangefahren wurde.

Der Mobilkran 1 weist einen fahrbaren Unterwagen mit Radfahrwerk und einen drehbar auf dem Unterwagen gelagerten Oberwagen auf, an welchen der Ausleger 10 montiert werden kann. Der Mobilkran 1 ist über eine mehrere Klapp- bzw. Schiebeholme 6 umfassende Abstützvorrichtung gegen ein Umkippen gesichert. Der Teleskopausleger 10 umfasst ein Anlenkstück 8, in welchem mehrere Teleskopschüsse verschiebbar ineinander gelagert sind. Der innerste Teleskopschuss weist am Ende einen Rollenkopf 11 auf. Das Anlenkstück 8 weist Verbindungsmittel 5 auf, welche mit entsprechenden Verbindungsmitteln 9 am Oberwagen des Mobilkrans 1 verbunden werden können, um eine die Wippachse des Auslegers 10 darstellende Bolzenverbindung zu bilden. In dem hier gezeigten Ausführungsbeispiel weist der Ausleger 10 zudem eine Y-Abspannung 7 auf, die am Ausleger 10 anliegt.

Der Sattelauflieger 2 weist eine plane Ladefläche 3 auf, auf der der demontierte Ausleger 10 über einen unbeweglichen Stützbock 14 und einen fahrbaren Rollenwagen 16 gelagert ist. Der Rollenkopf 11 des Auslegers 10 ist mit dem Rollenwagen 16 verbunden bzw. liegt auf diesem auf, während der Stützbock 14 im Heckbereich des Sattelaufliegers 2 angeordnet ist. Der Rollenwagen 16 weist mehrere Räder 26 auf, über die er im Bereich zwischen dem Stützbock 14 und der im Frontbereich des Transportfahrzeugs 2 angeordneten Fahrerkabine auf der Ladefläche 3 verfahrbar bzw. bewegbar ist.

Der am Sattelauflieger 2 angeordnete Stützbock 14 bildet zusammen mit einem am Heck des Mobilkrans 1 unbeweglich angeordneten Rollenbock 12 eine Stützvorrichtung der erfindungsgemäßen Vorrichtung. Während des Transports liegt der Ausleger 10 auf dem Stützbock 14 und dem Rollenwagen 16 auf, während er während des Montage- bzw. Demontagevorgangs auch auf dem Rollenbock 12 aufliegt.

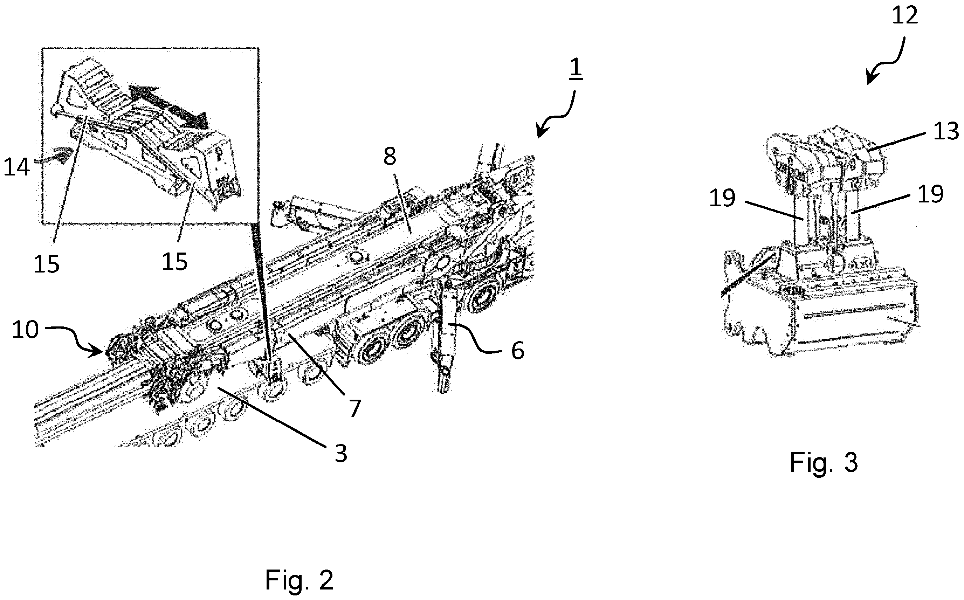

In der Figur 2 sind Mobilkran 1 und Sattelauflieger 2 in einer perspektivischen Ansicht gezeigt, wobei der Ausleger 10 am Oberwagen des Mobilkrans 1 montiert ist. Dabei ist der Stützbock 14 separat vergrößert dargestellt. Ein Ausführungsbeispiel des Rollenbocks 12 ist in der Figur 3 in einer perspektivischen Ansicht zu sehen.

Der Stützbock 14 weist zwei abgeschrägte, verschiebbare Blöcke 15 auf, welche eine Anpassung der Auflagefläche an den jeweiligen Ausleger 10 erlauben. Zudem ist es möglich, den Stützbock 14 durch Auseinanderfahren der Blöcke 15 in eine Freigabeposition zu verbringen, in der er eine horizontale Bewegung des Auslegers 10 nicht blockiert oder stört.

Der Rollenbock 12 weist im oberen Bereich ein Rollenlager 13 mit mehreren drehbaren Rollen auf, deren Drehachsen senkrecht zur horizontalen Bewegungsrichtung bzw. zur Längsachse des Auslegers 10 stehen. Das Rollenlager 13 ist über mindestens einen hydraulischen Zylinder 19 höhenverstellbar, sodass die Auflagefläche für den Ausleger 10 bzw. der auf dem Rollenbock 12 abgelegte Ausleger 10 nach oben oder unten bewegbar ist. Die hydraulische Versorgung der Zylinder 19 erfolgt über das Hydrauliksystem des Mobilkrans 1. Das Herstellen der hydraulischen Verbindung zum Mobilkran 1 kann beispielsweise an Hydraulikanschlüssen des Mobilkrans 1 zu einem Schiebholmkasten erfolgen, welcher bei einem solchen Kran häufig zum Transport abgebaut wird, oder aber auch an anderen Hydraulikanschlüssen des Mobilkrans 1.

Die erfindungsgemäße Vorrichtung bietet eine einfache, leicht vom Sattelauflieger 2 lösbare Montagevorrichtung und umfasst einen Führungsmechanismus zur horizontalen Bewegung des Rollenwagens 16 und somit des darauf gelagerten Auslegers 10. Hierzu ist eine als Hebezeugkette 20 ausgebildete Führungsvorrichtung auf dem Sattelauflieger 2 gespannt. Der Rollenwagen 16 weist eine Antriebseinheit 18 mit mehreren Kettenrädern 22, 24 auf, um welche die Hebezeugkette 20 läuft.

Die Verwendung einer Hebezeugkette 20 als Zugmittel zur Führung bzw. Bewegung des Rollenwagens 16 ist vorteilhaft in Bezug auf deren geringere Toleranzen und der geforderten Umlenkung durch die Kettenräder 22, 24 der Antriebseinheit 18. Hebezeugketten sind speziell für den Zweck des Antriebs und des Umlaufens um eine Kettenrolle zu Antriebszwecken hergestellt und eignen sich daher ideal für die präzise Verschiebung des Auslegers 10 mittels der erfindungsgemäßen Vorrichtung.

Die vorliegend verwendete Kette 20 wird über ein als Spannschloss ausgebildetes Spannmittel vorgespannt. Hierdurch ist die Positionierung des Rollenwagens 16 sehr exakt möglich. Ein Totweg zu Beginn der Antriebsbewegung ist minimiert. Die Anbindung an den Sattelauflieger 2 erfolgt über Befestigungsmittel 4, beispielsweise über Ladungssicherungsösen.

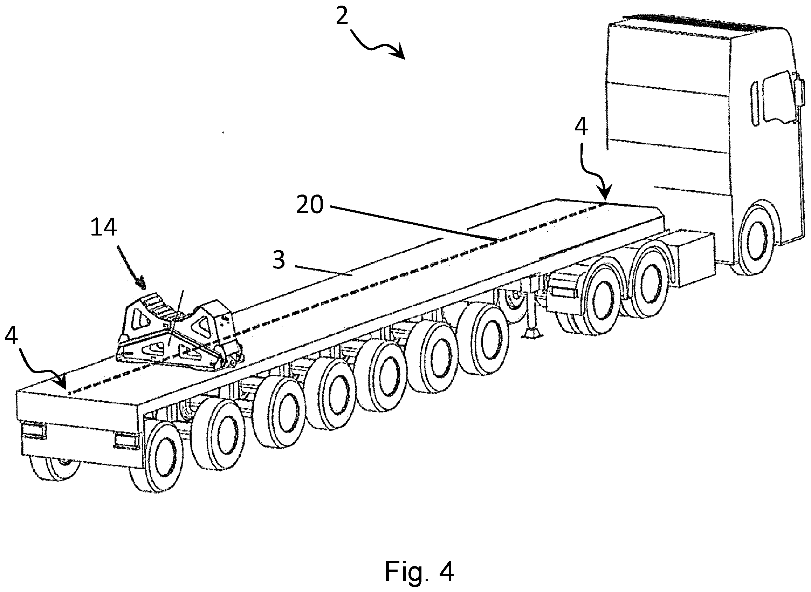

Die Figur 4 zeigt eine erste Möglichkeit der Ausgestaltung und Anordnung der Hebezeugkette 20. Es ist in einer perspektivischen, schematischen Ansicht die Zugmaschine mit dem Sattelauflieger 2 gezeigt, wobei die Hebezeugkette 20 als gestrichelte Linie dargestellt ist. Die Kette 20 ist mittig entlang der Längsachse des Sattelaufliegers 2 gespannt und verläuft daher parallel zur Verschiebungsrichtung des Auslegers 10. In dem hier gezeigten Ausführungsbeispiel ist die Hebezeugkette 20 als lineare Kette zwischen zwei mittig an den vorderen und hinteren Enden des Sattelaufliegers 2 angeordneten Befestigungsmitteln bzw. Ladungssicherungsösen 4 gespannt.

Diese zusätzlichen Ladungssicherungsösen 4 ermöglichen eine direkte und geradlinige Anbringung der Hebezeugkette 20, was eine besonders gute Spannung der Kette 20 mittels des Spannschlosses ermöglicht. Die zusätzlich zu den vorhandenen seitlichen Ladungssicherungsösen angebrachten mittigen Ladungssicherungsösen 4 beeinträchtigen dabei die universelle Verwendung des Sattelaufliegers 2 nicht.

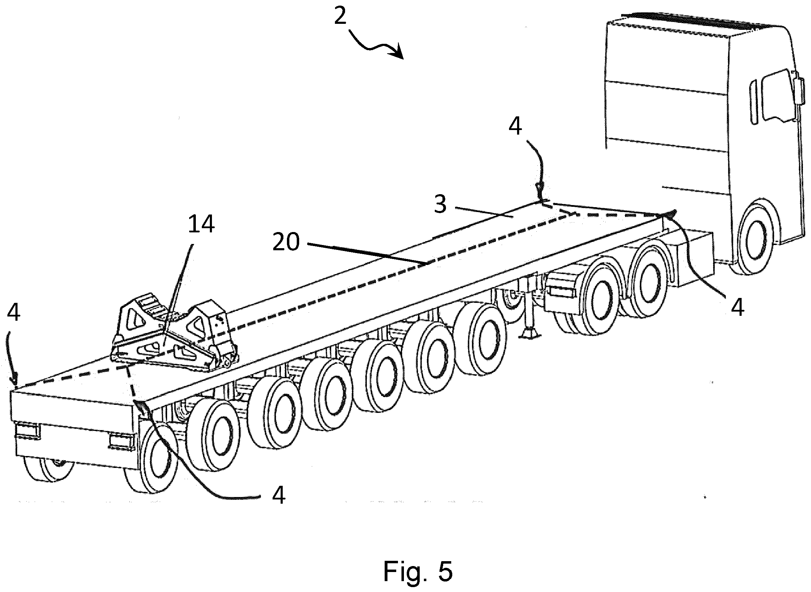

In der Figur 5 ist eine alternative Ausführungsform gezeigt, bei der die Hebezeugkette 20 an ihren beiden Enden über sich Y-mäßig verzweigende Verbindungselemente bzw. Kettenstränge an seitlich angeordneten Befestigungsmitteln bzw. Ladungssicherungsösen 4 befestigt ist.

Als Verbindungselemente zwischen der mittig verlaufenden Hebezeugkette 20 und den die Hebezeugkette 20 mit den Befestigungsmitteln 4 verbindenden Kettensträngen können Ausgleichswippen vorgesehen sein, wie dies in der DE 20 2018 107 005 U1 offenbart ist. An den Ausgleichswippen können optional hakenförmige Verkürzungselemente vorgesehen sein, mittels welchen sich die sich verzweigenden Kettenstränge reversibel verkürzen lassen, um einen einfachen Wechsel zwischen verschiedenen Transportfahrzeugen zu ermöglichen. Vorteilhaft an dieser Ausführungsform ist die Tatsache, dass bereits vorhandene, seitlich angeordnete Ladungssicherungsösen 4 zur Befestigung der Hebezeugkette 20 verwendet werden können. Allerdings ergibt sich bei der zweifachen Y-Form der Kettenformation ggf. eine schlechtere Spannbarkeit und somit ein erhöhter Totweg im Vergleich zu der Ausführungsform gemäß Figur 4.

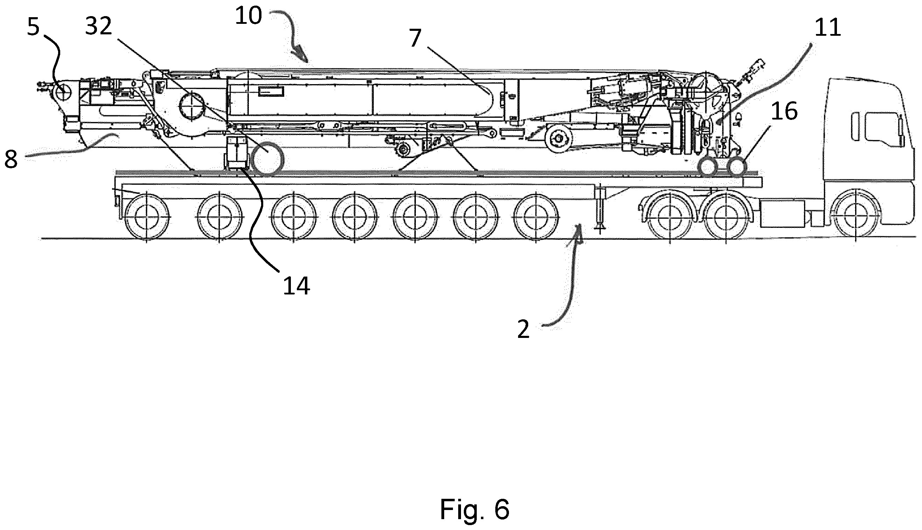

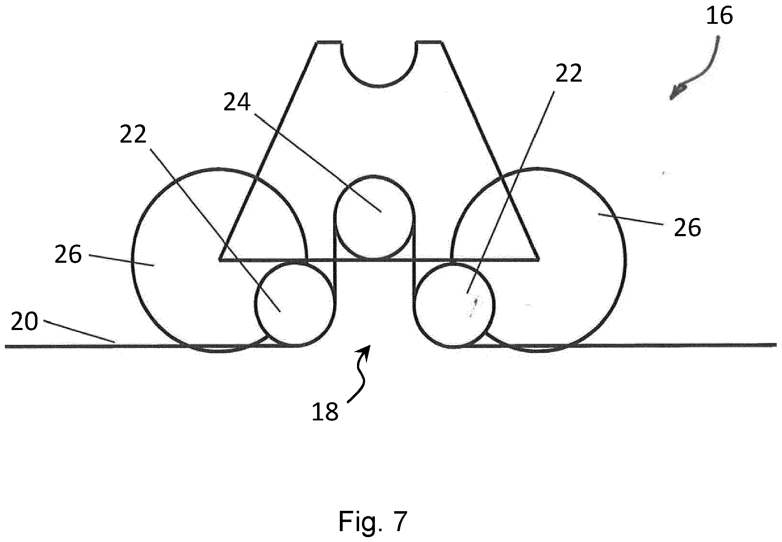

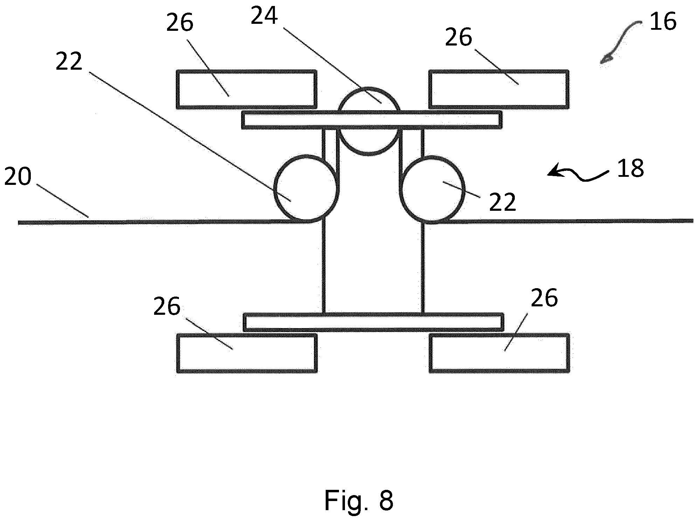

Die Figur 6 zeigt den auf dem Sattelauflieger 2 gelagerten demontierten Ausleger 10 in einer seitlichen Ansicht, wobei der Rollenwagen 16 und eine Schlauchtrommel 32 zusätzlich in schematischer Weise eingezeichnet sind. Der Rollenwagen 16 mit der Antriebseinheit 18 ist gemäß zweier unterschiedlicher Ausführungsbeispiele in den Figuren 7 und 8 schematisch dargestellt, wobei die Figur 7 eine Seitenansicht und die Figur 8 eine Draufsicht auf den Rollenwagen 16 zeigen.

Die horizontale Fahrbewegung des Auslegers 10 wird durch einen Kettentrieb am vorderen Auslegerauflagepunkt am Rollenwagen 16 realisiert. Der Rollenkopf 11 des Auslegers 10 liegt auf dem Rollenwagen 16 auf, der auf dem Sattelauflieger 2 fahren kann. Die Antriebseinheit 18 mit den Kettenrädern 22, 24, um die die Hebezeugkette 20 umläuft, ist in den Rollenwagen 16 integriert. Die Energieversorgung des Rollenwagens 16 bzw. der Antriebseinheit 18 erfolgt hydraulisch über Verbindungsschläuche 30 und eine Schlauchtrommel 32. Die hydraulische Versorgung erfolgt über einen Anschluss der Hilfshydraulik am Mobilkran 1.

Die Lagerung des Auslegers 10 erfolgt bei der Verschiebung vollständig rollengelagert. Somit sind die benötigten Antriebskräfte sehr klein und als Antrieb dient eine ausschließlich für diesen Zweck vorgesehene bzw. ausgelegte Antriebseinheit 18. Aufgrund des kleinen benötigten Volumenstroms an Hydrauliköl, sind die Querschnitte aller Hydraulikanschlüsse klein und somit die Bauteile einfach zu handhaben. Durch diese Bauweise ist es auch möglich, die Teleskopauslegerabspannung 7 am Ausleger 10 zu belassen, während dieser vom Mobilkran 1 abgenommen wird.

Der Rollenwagen 16 ist mit vier Rädern 26 ausgestattet (hier können selbstverständlich mehr Räder 26 verwendet werden). Die auf dem Sattelauflieger 2 gespannte Hebezeugkette 20 wird durch drei Kettenräder 22, 24 geführt (auch hier sind Ausführungsformen mit mehr als drei Kettenrädern 22, 24 denkbar), wobei eines der Kettenräder 24, idealerweise wegen des größten Umschlingungswinkels, als Antrieb dient. Der Antrieb dieses Kettenrads 24 erfolgt hydraulisch, versorgt über die Schlauchtrommel 32. Letztere wird mit der Hydraulik des Mobilkrans 1 verbunden.

Die Kettenräder 22, 24 weisen idealerweise einen kleineren Durchmesser als die Räder 26 auf, was aber nicht zwingend der Fall sein muss. Die Kettenräder 22, 24 dienen auch dazu, einen möglichst tiefen Einlaufpunkt der Kette 20 in den Rollenwagen 16 zu ermöglichen. So erfolgt eine möglichst geringe Auslenkung der Hebezeugkette 20. Nachteilig an einer solchen Auslenkung ist nämlich die am Ende der Bewegung auftretende Verzwängung der Kette 20 aufgrund der Kettenspannung.

Dementsprechend zeigt die Figur 7 ein Ausführungsbeispiel, bei dem die Kettenräder 22, 24 so angeordnet sind, dass die Hebezeugkette 20 in einer vertikalen Ebene umläuft, d.h. durch das erste Kettenrad 22 nach oben umgelenkt wird, das Antriebsrad 24 umläuft, und anschließend durch das dritte Kettenrad 22 wieder in die horizontale Richtung gelenkt wird. Die Drehachsen der Kettenräder 22, 24 verlaufen parallel zu den Drehachsen der Räder 26 des Rollenwagens 16.

Alternativ ist auch eine Variante mit einer liegenden Antriebseinheit 18 denkbar, wie sie in der Figur 8 gezeigt ist. Hier wird die Kette 20 innerhalb einer horizontalen Ebene umgelenkt, d.h. die Drehachsen der Kettenräder 22, 24 stehen senkrecht auf die Drehachsen der Räder 26 des Rollenwagens 16. Der Vorteil dieser Ausführungsform besteht in einer niedrigeren Bauhöhe des Rollenwagens 16, da die Antriebseinheit 18 aus dem Bereich des Auslegerkopfs bzw. Rollenkopfs gelegt werden kann. Dieser Vorteil wird aber mit einem höheren Einlauf der Hebezeugkette 20 in den Rollenwagen 16 "erkauft".

Die Hebezeugkette 20 dient der Bewegung des Rollenwagens 16 und kann ausschließlich Zugkräfte übertragen. Sie besitzt mindestens zwei Verbindungsstellen 4 zum Sattelauflieger 2, welche einmal am vorderen Ende und einmal am hinteren Ende der Aufliegerfläche 3 positioniert sind. Je nach Bewegungsrichtung, sprich Demontage oder Montage, überträgt eines der Enden der Hebezeugkette 20 über die Ladungssicherungsösen 4 die Kraft in den Sattelauflieger 2.

Dies beinhaltet einen weiteren wesentlichen Vorteil gegenüber dem aus dem Stand der Technik bekannten Antrieb über einen langen Zylinder. Der Zylinder überträgt Zug- und Druckkräfte. Bei der Belastung auf Druck aber sind die Knicklasten mit zu betrachten. Aus diesem Grund ist der lange Zylinder schwerer als eigentlich notwendig auszuführen und ggf. sind sogar weitere Verbindungsstellen zur Aufliegerfläche notwendig, um den Zylinder zu führen und vor der Knickung zu schützen.

Im Folgenden wird ein Ausführungsbeispiel eines erfindungsgemäßen Verfahrens zur Montage eines Teleskopauslegers 10 an einem Mobilkran 1 beschrieben:
1. Bei Bedarf: Anbringen des Rollenbocks 12 am Mobilkran 1 und Herstellen der hydraulischen Verbindung(en) zum Mobilkran 1. Alternativ kann der Rollenbock 12 fest am Mobilkran 1 montiert sein.
2. Positionieren des Sattelaufliegers 2 mit der angebauten Hebezeugkette 20, dem angebauten Stützbock 14 und dem auf der Aufliegerfläche 3 gelagerten Teleskopausleger 10 relativ zum Mobilkran 1 sowie Herstellen der hydraulischen Verbindung(en) zwischen dem Hydrauliksystem des Mobilkrans 1 (z.B. einem hydraulischen Hilfsantrieb) und der Schlauchtrommel 32 bzw. der Antriebseinheit 18 des Rollenwagens 16. Hierbei wird insbesondere auch der Ausleger 10 oberhalb des Rollenbocks 12 positioniert.
3. Ausfahren des Rollenbocks 12 nach oben, bis die Rollenlagerung 13 den Ausleger 10 kontaktiert.
4. Lösen aller Transportsicherungen, insbesondere Lösen der Fixierung bzw. Verriegelung am Stützbock 14, und Herstellen der mechanischen und sonstigen Verbindungen zwischen Mobilkran 1 und Sattelauflieger 2. Dieser Schritt kann auch vor Schritt 3 durchgeführt werden.
5. Anheben des Teleskopauslegers 10 über die Zylinder 19 im Rollenbock 12, d.h. Ausfahren des Rollenbocks 12 nach oben. Hierbei hebt der Teleskopausleger 10 vom Stützbock 14 ab. Der Ausleger 10 liegt nun auf dem Rollenwagen 16 und dem Rollenbock 12 auf, ist also ausschließlich rollengelagert.
6. Verbringen des Stützbocks 14 in die Freigabeposition, damit er der Bewegung des Teleskopauslegers 10 später nicht im Weg steht. Alternativ kann ein unbeweglicher Stützbock 14 verwendet werden und dieser Schritt entfallen.
7. Horizontales Verfahren des Rollenwagens 16 mit dem gesamten Teleskopausleger 10 in Richtung Mobilkran 1 entlang der Auslegerlängsachse. Hierbei rollt der Rollenwagen 16 auf der Aufliegerfläche 3 und das Anlenkstück 8 des Auslegers 10 rollt auf der Rollenlagerung 13 am Rollenbock 12.
8. Ggf. Feinausrichten des Auslegers 10 relativ zum Mobilkran 1 durch Ein- oder Ausfahren des Rollenbocks 12, damit sich die Verbindungsmittel 5, 9 von Mobilkran 1 und Ausleger 10 überdecken.
9. Herstellen der Bolzenverbindung und aller weiteren elektrischen / hydraulischen Verbindungen zwischen Mobilkran 1 und Teleskopausleger 10 sowie Setzen des Auslegerbolzens an der Auslegennrippachse 5, 9.
10. Wippzylinder mit Ausleger 10 verbinden.
11. Aufwippen des Teleskopauslegers 10, bis er mit seinem Rollenkopf 11 vom Rollenwagen 16 abhebt und das Anlenkstück 8 vom Rollenbock 12 abhebt.
12. Lösen der hydraulischen Verbindung(en) zwischen Mobilkran 1 und Schlauchtrommel 32 bzw. Antriebseinheit 18 des Rollenwagens 16.

Der Sattelauflieger 2 kann nun für andere Zwecke verwendet werden. Hierbei können das Zugmittel bzw. die Hebezeugkette 20 und/oder der Rollenwagen 16 abgebaut werden. Ebenfalls kann nun der Rollenbock 12 vom Mobilkran 1 abgebaut werden.

Ein entsprechendes Verfahren zur Demontage des Teleskopauslegers 10 mittels der erfindungsgemäßen Vorrichtung kann gemäß einem Ausführungsbeispiel folgendermaßen durchgeführt werden:
1. Bei Bedarf: Anbringen des Rollenbocks 12 am Mobilkran 1 und Herstellen der hydraulischen Verbindung(en) zum Mobilkran 1. Alternativ kann der Rollenbock 12 fest am Mobilkran 1 montiert sein.
2. Positionieren des Sattelaufliegers 2 mit der angebauten Hebezeugkette 20 und dem angebauten Stützbock 14 relativ zum Mobilkran 1 sowie Herstellen der hydraulischen Verbindung(en) zwischen dem Hydrauliksystem des Mobilkrans 1 und der Schlauchtrommel 32 bzw. der Antriebseinheit 18 des Rollenwagens 16.
3. Positionieren des Rollenwagens 16 in der Demontageposition (also näher am Stützbock 14 als bei der Montage) sowie Verbringen des Stützbocks 14 in die Freigabeposition, damit er der Bewegung des Teleskopauslegers 10 später nicht im Weg steht.
4. Abwippen des Teleskopauslegers 10, bis er mit seinem Rollenkopf 11 in seiner vorgesehenen Aufnahme am Rollenwagen 16 positioniert ist (d.h. er liegt nach dem Absetzen auf dem Rollenbock 12 sowie auf dem Rollenwagen 16 auf).
5. Bewegen der Auflagestelle 13 am Rollenbock 12 gegen das Anlenkstück 8 des Teleskopauslegers 10 (d.h. Ausfahren des Rollenbocks 12 in Richtung Teleskopausleger 10) und Entlasten der Bolzenverbindung zwischen dem Anlenkstück 8 und dem Wippzylinder.
6. Lösen der Bolzenverbindung und aller weiteren elektrischen / hydraulischen Verbindungen zwischen Mobilkran 1 und Teleskopausleger 10 sowie Lösen des Auslegerbolzens an der Auslegennrippachse 5, 9.
7. Horizontales Verfahren des Rollenwagens 16 mit dem gesamten Teleskopausleger 10 vom Mobilkran 1 weg (d.h. der Ausleger 10 entfernt sich vom Mobilkran 1) entlang der Auslegerlängsachse. Hierbei rollt der Rollenwagen 16 auf der Aufliegerfläche 3 und das Anlenkstück 8 rollt auf der Rollenlagerung 13 am Rollenbock 12.
8. Schließen der hinteren Transportaufnahme, d.h. Verbringen des Stützbocks 14 in die Fixierungsposition, in der der Ausleger 10 auf dem Stützbock 14 ablegbar und fixierbar ist.
9. Ablassen des Teleskopauslegers 10 über die Zylinder 19 im Rollenbock 12, d.h. Einfahren des Rollenbocks 12. Hierbei senkt sich der Teleskopausleger 10 auf den Stützbock 14 ab.
10. Herstellen aller Transportsicherungen, insbesondere Herstellen der Fixierung bzw. Verriegelung am Stützbock 14, und Trennen der mechanischen und sonstigen Verbindungen zwischen Mobilkran 1 und Sattelauflieger 2.

In den beiden zuvor beschriebenen Verfahren müssen die aufgezählten Schritte nicht zwingend in der angegebenen Reihenfolge durchgeführt werden bzw. manche der Schritte können gemeinsam durchgeführt werden (z.B. die Schritte 3 und 5 des Montageverfahrens).

### Bezugszeichenliste:

- 1: Mobilkran
- 2: Transportfahrzeug (Sattelauflieger)
- 3: Ladefläche / Aufliegerfläche
- 4: Befestigungsmittel (Ladungssicherungsöse)
- 5: Verbindungsmittel / Wippachse (Ausleger)
- 6: Schiebeholm
- 7: Abspannung
- 8: Anlenkstück
- 9: Verbindungsmittel / Wippachse (Oberwagen)
- 10: Ausleger
- 11: Rollenkopf
- 12: Rollenbock
- 13: Rollenlagerung
- 14: Stützbock
- 15: Block
- 16: Rollenwagen
- 18: Antriebseinheit
- 19: Zylinder
- 20: Zugmittel (Hebezeugkette)
- 22: Rolle
- 24: Rolle (Antriebsrolle oder Kettenrad)
- 26: Rad
- 30: Hydraulikschlauch
- 32: Schlauchtrommel

## Patentansprüche

1. Vorrichtung zur Montage und Demontage eines Mobilkranauslegers (10), umfassend
- eine am Mobilkran (1) und/oder einem Transportfahrzeug (2) angebrachte oder anbringbare Stützvorrichtung, auf welcher der Ausleger (10) ablegbar und fixierbar ist, und
- einen Rollenwagen (16), auf welchem der Ausleger (10) ablegbar ist und welcher beweglich auf dem Transportfahrzeug (2) gelagert oder lagerbar ist,
**gekennzeichnet durch**
- einen am Transportfahrzeug (2) angebrachten oder anbringbaren Führungsmechanismus, mittels welchem der Rollenwagen (16) parallel zur Längsachse des Auslegers (10) aktiv bewegbar und dadurch der Ausleger verschiebbar ist, wobei der Führungsmechanismus eine Antriebseinheit (18) umfasst, welche entlang einer Führungsvorrichtung bewegbar und am Rollenwagen (16) angeordnet ist.

2. Vorrichtung nach Anspruch 1, **dadurch gekennzeichnet, dass** die Stützvorrichtung einen am Mobilkran (1) oder Transportfahrzeug (2) angebrachten oder anbringbaren Rollenbock (12) mit einer Rollenlagerung (13) zur Aufnahme und Führung des Auslegers (10) umfasst, welcher vorzugsweise in vertikaler Richtung höhenverstellbar ist.

3. Vorrichtung nach Anspruch 1 oder 2, **dadurch gekennzeichnet, dass** die Stützvorrichtung einen am Transportfahrzeug (2) angebrachten oder anbringbaren Stützbock (14) umfasst, welcher vorzugsweise von einer Fixierungsposition, in welcher der Ausleger (10) auf dem Stützbock (14) ablegbar ist und/oder fixierbar ist, in eine Freigabeposition, in welcher er eine horizontale Bewegung des Auslegers (10) nicht blockiert, verbringbar ist und umgekehrt.

4. Vorrichtung nach einem der vorhergehenden Ansprüche, **dadurch gekennzeichnet, dass** die Führungsvorrichtung ein entlang einer Ladefläche (3) des Transportfahrzeugs (2) angebrachtes oder anbringbares Zugmittel (20) umfasst, welches über eine oder mehrere Rollen (22, 24) der Antriebseinheit (18) geführt ist, wobei mindestens eine der Rollen (22, 24) aktiv antreibbar ist.

5. Vorrichtung nach Anspruch 4, **dadurch gekennzeichnet, dass** das Zugmittel (20) lösbar auf der Ladefläche (3) des Transportfahrzeugs (2) montierbar ist, vorzugsweise über Befestigungsmittel (4), welche an einem vorderen und einem hinteren Ende der Ladefläche (3) angeordnet sind.

6. Vorrichtung nach Anspruch 4 oder 5, **dadurch gekennzeichnet, dass** das Zugmittel (20) eine Kette, insbesondere Hebezeugkette, ist oder umfasst, welche über ein oder mehrere Kettenräder (22, 24) der Antriebseinheit (18) geführt ist, wobei die Kette (20) vorzugsweise ein Spannmittel umfasst, mittels welchem die Kette (20) spannbar ist.

7. Vorrichtung nach einem der vorhergehenden Ansprüche, **dadurch gekennzeichnet, dass** die Antriebseinheit (18) hydraulisch antreibbar ist, wobei eine Hydraulikleitung vorgesehen ist, welche von der Antriebseinheit (18) zu einem Hydraulikanschluss des Mobilkrans (1) verlegbar ist und welche vorzugsweise einen auf einer Schlauchtrommel (32) auf- und abwickelbar gelagerten Hydraulikschlauch (30) umfasst.

8. Vorrichtung nach einem der vorhergehenden Ansprüche, **dadurch gekennzeichnet, dass** der Führungsmechanismus über ein Hydrauliksystem des Mobilkrans (1) antreibbar ist.

9. Mobilkran (1) mit einer Vorrichtung nach einem der vorhergehenden Ansprüche.

10. Verfahren zur Montage eines auf einem Transportfahrzeug (2) gelagerten Auslegers (10) an einem Mobilkran (1) unter Verwendung der Vorrichtung nach einem der Ansprüche 1 bis 8, mit den Schritten:
- Positionieren des Transportfahrzeugs (2) relativ zum Mobilkran (1),
- Lösen der Fixierung des Auslegers (10) am Transportfahrzeug (2), insbesondere an der Stützvorrichtung,
- Verschieben des Auslegers (10) entlang von dessen Längsachse in Richtung Mobilkran (1) durch aktives Bewegen des Rollenwagens (16), wobei der Ausleger (10) auf der Stützvorrichtung und dem Rollenwagen (16) rollend gelagert ist,
- Verbinden des Auslegers (10) mit dem Mobilkran (1), und
- Aufwippen des Auslegers (10), sodass er von der Stützvorrichtung und dem Rollenwagen (16) abhebt.

11. Verfahren nach Anspruch 11, **dadurch gekennzeichnet, dass** die Stützvorrichtung einen am Transportfahrzeug (2) angebrachten Stützbock (14) umfasst, wobei vor dem Verschieben des Auslegers (10) der Stützbock (14) von einer Fixierungsposition in eine Freigabeposition bewegt wird, in welcher der Stützbock (14) eine Verschiebung des Auslegers (10) nicht blockiert.

12. Verfahren nach Anspruch 12, **dadurch gekennzeichnet, dass** die Stützvorrichtung einen am Mobilkran (1) angebrachten, höhenverstellbaren Rollenbock (12) mit einer Rollanlagerung (13) zur Aufnahme und Führung des Auslegers (10) umfasst, wobei nach dem Lösen der Fixierung des Auslegers (10) der Rollenbock (12) nach oben ausgefahren wird, sodass der Ausleger (10) vom Stützbock (14) abhebt, wobei vorzugsweise nach dem Verschieben der Ausleger (10) am Mobilkran (1) durch Verstellung des Rollenbocks (12) in eine Montageposition verbringbar ist, in welcher eine Verbindung zwischen Ausleger (10) und Mobilkran (1) herstellbar ist.

13. Verfahren nach einem der Ansprüche 11 bis 13, **dadurch gekennzeichnet, dass** der Führungsmechanismus eine am Rollenwagen (16) angeordnete Antriebseinheit (18) umfasst, welche mit einem entlang einer Ladefläche (3) des Transportfahrzeugs (2) angebrachten Zugmittel (20), insbesondere einer Kette, in Verbindung steht, wobei durch Antreiben der Antriebseinheit (18) der Rollenwagen (16) samt Ausleger (10) in Richtung Mobilkran (1) bewegt wird.

14. Verfahren nach Anspruch 14, **dadurch gekennzeichnet, dass** die Antriebseinheit (18) hydraulisch durch ein Hydrauliksystem des Mobilkrans (1) angetrieben wird, wobei nach dem Positionieren des Transportfahrzeugs (2) relativ zum Mobilkran (1) eine hydraulische Verbindung zwischen der Antriebseinheit (18) und dem Hydrauliksystem des Mobilkrans (1) hergestellt wird, vorzugsweise über einen auf einer Schlauchtrommel (32) auf- und abwickelbar gelagerten Hydraulikschlauch (30).

## Claims

1. Apparatus for assembling/disassembling a mobile crane boom (10) comprising
- a support device that is attached or attachable to the mobile crane (1) and/or to a transport vehicle (2) and on which the boom (10) can be placed and fixed;
- a roller cart (16) on which the boom (10) can be placed and that is movably stored or storable on the transport vehicle (2); and **characterized by**
- a guide mechanism that is attached or attachable to the transport vehicle (2) and by means of which the roller cart (16) is actively movable in parallel with the longitudinal axis of the boom (10) and the boom is thereby displaceable, wherein the guide mechanism comprises a drive unit (18) that is movable along a guide device, with the drive unit (18) preferably being arranged on the roller cart (16).

2. Apparatus in accordance with claim 1, **characterized in that** the support device comprises a pulley block (12) attached or attachable to the mobile crane (1) or transport vehicle (2) and having a roller bearing assembly (13) for mounting and guiding the boom (10) that is preferably vertically adjustable in the vertical direction.

3. Apparatus in accordance with claim 1 or claim 2, **characterized in that** the support device comprises a support block (14) that is attached or attachable to the transport vehicle (2) and that can preferably be moved from a fixing position in which the boom (10) can be placed on and/or fixed to the support block (14) into a release position in which it does not block a horizontal movement of the boom (10) and vice versa.

4. Apparatus in accordance with one of the preceding claims, **characterized in that** the guide device comprises a pulling means (20) that is attached or attachable along a load surface (3) of the transport vehicle (2) and that is guided via one or more rollers (22, 24) of the drive unit (18), with at least one of the rollers (22, 24) being actively drivable.

5. Apparatus in accordance with claim 4, **characterized in that** the pulling means (20) is releasably mountable on the load surface (3) of the transport vehicle (2), preferably via fastening means (4) that are arranged at a front end and a rear end of the load surface (3).

6. Apparatus in accordance with claim 4 or claim 5, **characterized in that** the pulling means (20) is or comprises a chain, in particular a hoisting gear chain, that is guided via one or more sprocket wheels (22, 24) of the drive unit (18), with the chain (20) preferably comprising a tensioning means by means of which the chain (20) can be tensioned.

7. Apparatus in accordance with one of the preceding claims, **characterized in that** the drive unit (18) is hydraulically drivable, with a hydraulic line being provided that can be laid from the drive unit (18) to a hydraulic connector of the mobile crane (1) and that preferably comprises a hydraulic hose (30) stored on a hose drum (32) in a windable and unwindable manner.

8. Apparatus in accordance with one of the preceding claims, **characterized in that** the guide mechanism is drivable via a hydraulic system of the mobile crane (1).

9. Mobile crane (1) comprising an apparatus in accordance with one of the preceding claims.

10. Method of assembling a boom (10) stored on a transport vehicle (2) on a mobile crane (1) using the apparatus in accordance with one of the claims 1 to 8, the method comprising the steps:
- positioning the transport vehicle (2) relative to the mobile crane (1); releasing the fixing of the boom (10) at the transport vehicle (2), in particular at the support device;
- displacing the boom (10) along its longitudinal axis in the direction of the mobile crane (1) by an active movement of the roller cart (16), with the boom (10) being roller supported on the support device and the roller cart (16);
- connecting the boom (10) to the mobile crane (1); and
- luffing up the boom (10) so that it rises from the support device and the roller cart (16).

11. Method in accordance with claim 11, **characterized in that** the support device comprises a support block (14) attached to the transport vehicle (2), with the support block (14) being moved prior to the displacement of the boom (10) from a fixing position into a release position in which the support block (14) does not block a displacement of the boom (10).

12. Method in accordance with claim 12, **characterized in that** the support device comprises a roller block (12) attached to the mobile crane (1), vertically adjustable, and having a roller bearing assembly (13) for mounting and receiving the boom (10), with the roller block (12) being extended upwardly after the release of the fixing of the boom (10) so that the boom (10) rises from the support block (14), with the boom (10) at the mobile crane (1) preferably being movable by adjustment of the roller block (12) after the displacement into an assembly position in which a connection can be established between the boom (10) and the mobile crane (1).

13. Method in accordance with one of the claims 11 to 13, **characterized in that** the guide mechanism comprises a drive unit (18) that is arranged at the roller cart (16) and that is connected to a pulling means (20), in particular a chain, attached along a load surface (3) of the transport vehicle (2), with the roller cart (16) being moved together with the boom (10) in the direction of the mobile crane (1) by driving the drive unit (18).

14. Method in accordance with claim 14, **characterized in that** the drive unit (18) is hydraulically driven by a hydraulic system of the mobile crane (1), with a hydraulic connection being established between the drive unit (18) and the hydraulic system of the mobile crane (1), preferably via a hydraulic hose (30) stored in a windable and unwindable manner on a hose drum (32) after the positioning of the transport vehicle (2) relative to the mobile crane (1).

## Revendications

1. Dispositif de montage et de démontage d'une flèche de grue mobile (10), comprenant
- un dispositif de support qui est ou peut être monté sur la grue mobile (1) et/ou un véhicule de transport (2) et sur lequel la flèche (10) peut être posée et fixée, et
- un chariot (16) sur lequel la flèche (10) peut être posée et qui est ou peut être placé mobile sur le véhicule de transport (2),
**caractérisé par**
- un mécanisme de guidage qui est ou peut être monté sur le véhicule de transport (2) et au moyen duquel le chariot (16) peut être activement mis en mouvement parallèlement à l'axe longitudinal de la flèche (10) et la flèche ainsi déplacée, le mécanisme de guidage comprenant une unité d'entraînement (18) qui est agencée sur le chariot (16) et mobile le long d'un dispositif de guidage.

2. Dispositif selon la revendication 1, **caractérisé en ce que** le dispositif de support comprend un chevalet à rouleaux (12) qui est ou peut être monté sur la grue mobile (1) ou le véhicule de transport (2), qui comporte un palier à rouleaux (13) destiné à recevoir et guider la flèche (10) et qui est de préférence réglable en hauteur dans la direction verticale.

3. Dispositif selon la revendication 1 ou 2, **caractérisé en ce que** le dispositif de support comprend un chevalet de support (14) qui est ou peut être monté sur le véhicule de transport (2) et qui peut de préférence être amené d'une position de fixation, dans laquelle la flèche (10) peut être posée et/ou fixée sur le chevalet de support (14), à une position de déblocage, dans laquelle il ne bloque pas le mouvement horizontal de la flèche (10), et inversement.

4. Dispositif selon l'une des revendications précédentes, **caractérisé en ce que** le dispositif de guidage comprend un moyen de traction (20) qui est ou peut être monté le long d'une surface de chargement (3) du véhicule de transport (2) et qui est guidé sur une ou plusieurs poulies (22, 24) de l'unité d'entraînement (18), au moins une des poulies (22, 24) pouvant être entraînée activement.

5. Dispositif selon la revendication 4, **caractérisé en ce que** le moyen de traction (20) peut être monté de manière détachable sur la surface de chargement (3) du véhicule de transport (2), de préférence par le biais de moyens de fixation (4) qui sont agencés à une extrémité avant et une extrémité arrière de la surface de chargement (3).

6. Dispositif selon la revendication 4 ou 5, **caractérisé en ce que** le moyen de traction (20) est ou comprend une chaîne, en particulier une chaîne d'engin de levage, qui est guidée par le biais d'une ou plusieurs poulies à chaîne (22, 24) de l'unité d'entraînement (18), la chaîne (20) comprenant de préférence un moyen tendeur au moyen duquel la chaîne (20) peut être tendue.

7. Dispositif selon l'une des revendications précédentes, **caractérisé en ce que** l'unité d'entraînement (18) peut être entraînée hydrauliquement, une conduite hydraulique étant prévue, laquelle peut être installée de l'unité d'entraînement (18) à un raccordement hydraulique de la grue mobile (1) et comprend de préférence un tuyau hydraulique (30) placé de manière enroulable et déroulable sur un dévidoir-enrouleur de tuyau (32).

8. Dispositif selon l'une des revendications précédentes, **caractérisé en ce que** le mécanisme de guidage peut être entraîné par le biais d'un système hydraulique de la grue mobile (1).

9. Grue mobile (1) comportant un dispositif selon l'une des revendications précédentes.

10. Procédé de montage d'une flèche (10), placée sur un véhicule de transport (2), sur une grue mobile (1) au moyen du dispositif selon l'une des revendications 1 à 8, comprenant les étapes consistant à :
- positionner le véhicule de transport (2) par rapport à la grue mobile (1),
- desserrer la fixation de la flèche (10) sur le véhicule de transport (2), en particulier sur le dispositif de support,
- déplacer la flèche (10) le long de son axe longitudinal en direction de la grue mobile (1) par un mouvement actif du chariot (16), la flèche (10) étant placée sur le dispositif de support et le chariot (16) de manière à pouvoir rouler,
- relier la flèche (10) à la grue mobile (1), et
- relever la flèche (10) en la basculant, de telle sorte qu'elle se soulève du dispositif de support et du chariot (16).

11. Procédé selon la revendication 11, **caractérisé en ce que** le dispositif de support comprend un chevalet de support (14) qui est monté sur le véhicule de transport (2), le chevalet de support (14) effectuant un mouvement, avant le déplacement de la flèche (10), d'une position de fixation à une position de déblocage, dans laquelle le chevalet de support (14) ne bloque pas le déplacement de la flèche (10).

12. Procédé selon la revendication 12, **caractérisé en ce que** le dispositif de support comprend un chevalet à rouleaux (12) réglable en hauteur, monté sur la grue mobile (1) et comportant un palier à rouleaux (13) pour recevoir et guider la flèche (10), le chevalet à rouleaux (12) étant déployé vers le haut après le desserrement de la fixation de la flèche (10), de telle sorte que la flèche (10) se soulève du chevalet de support (14), la flèche (10) pouvant de préférence, après le déplacement, être amenée, par le déplacement du chevalet à rouleaux (12), dans une position de montage sur la grue mobile (1), dans laquelle une liaison entre la flèche (10) et la grue mobile (1) peut être établie.

13. Procédé selon l'une des revendications 11 à 13, **caractérisé en ce que** le mécanisme de guidage comprend une unité d'entraînement (18) agencée sur le chariot (16), laquelle est en liaison avec un moyen de traction (20), en particulier une chaîne, monté le long d'une surface de chargement (3) du véhicule de transport (2), l'entraînement de l'unité d'entraînement (18) permettant de mouvoir le chariot (16) avec la flèche (10) en direction de la grue mobile (1).

14. Procédé selon la revendication 14, **caractérisé en ce que** l'unité d'entraînement (18) est entraînée hydrauliquement par un système hydraulique de la grue mobile (1), une liaison hydraulique entre l'unité d'entraînement (18) et le système hydraulique de la grue mobile (1) étant établie après le positionnement du véhicule de transport (2) par rapport à la grue mobile (1), de préférence par le biais d'un tuyau hydraulique (30) placé de manière enroulable et déroulable sur un dévidoir-enrouleur de tuyau (32).
